# EUROPÄISCHE PATENTSCHRIFT

(11) **EP 2 213 491 B1**
(45) Veröffentlichungstag und Bekanntmachung des Hinweises auf die Patenterteilung: **02.12.2015**
(21) Anmeldenummer: 09014940.2
(22) Anmeldetag: 02.12.2009
(51) Int. Cl.: B60J 7/20

(54) **Betätigungseinrichtung für einen Verdeckkastendeckel**
Actuator for the cover of a roof storage compartment
Dispositif d'actionnement pour un couvercle de coffre de capote

(30) Priorität: 29.01.2009 DE 102009006721
(43) Veröffentlichungstag der Anmeldung: 04.08.2010
(73) Patentinhaber: AUDI AG, 85045 Ingolstadt (DE)
(72) Erfinder: Just, Jan, Bloomfield Hills, MI 48301 (US); Stapler, Waldemar, Dipl.-Ing.(FH), 71032 Boblingen (DE); Yoder, Kwan, Waterford, MI 483292 (US)
(74) Vertreter: Engelhardt, Harald

(56) Entgegenhaltungen:
- EP-A2- 1 964 705
- DE-A1-102005 006 272
- DE-T2- 60 029 213

## Beschreibung

Die Erfindung bezieht sich auf eine Betätigungseinrichtung für einen Verdeckkastendeckel eines Personenkraftwagens, nach dem Oberbegriff des Patentanspruchs 1. Eine solche Betätigungseinrichtung ist aus DE 102005006272 A bekannt.

Es ist ein Kofferraummechanismus eines Cabriofahrzeugs bekannt, DE 600 29 213 T2, bei dem ein Faltverdeck zwischen einer Schließstellung und einer Offenstellung bewegbar ist. In der Offenstellung des Faltverdecks ist letzteres in einen Kofferraum abgesenkt, der mittels eines schwenkbaren Deckels verschließbar ist. Zur Verstellung des Deckels dient eine Betätigungseinrichtung, die Hebel und Antriebsvorrichtungen aufweist. Die Hebel und die Antriebsvorrichtungen wirken mit Hauptlagern zusammen, die an Längsseiten von Wandstrukturen eines Aufbaus des Fahrzeugs angeordnet sind.

Die DE 101 60 406 A1 offenbart einen Verdeckkastendeckel eines Cabriolet-Fahrzeugs, mit dem ein Verdeckkasten zur Aufnahme eines Faltverdecks verschließbar ist. Der Verdeckkastendeckel ist zwischen einer Abdeckposition und einer Öffnungsposition bewegbar, und zwar unter Zwischenschaltung einer Deckelkinematik. In der Abdeckposition wird der Verdeckkastendeckel mittels einer Verriegelungseinrichtung lagefixiert. Die Verriegelungseinrichtung wirkt über ein Koppelelement mit der Deckelkinematik zusammen.

Es ist Aufgabe der Erfindung, eine Betätigungseinrichtung für einen Verdeckkastendeckel eines Personenkraftwagens zu schaffen, deren mit einem Hauptlager zusammenwirkende Verdeckgestänge und Antriebseinheiten sich bei definiert geringem Raumanspruch durch Einfachheit und gute Funktion auszeichnen. Dabei sollte aber auch sicher gestellt werden, dass der Verdeckkastendeckel in seiner aufgestellten Betriebsstellung eine für die Bewegung eins Faltverdecks günstige Lage einnimmt.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass das Zusammenwirken der Antriebseinheit mit dem Betätigungshebel, dem ersten Koppelhebel, dem am Verdeckkastendeckel gehaltenen Traghebel, dem ersten Steuerhebel, dem zweiten am Traghebel gelagerten Steuerhebel sowie dem zweiten Koppelhebel und dem Verbindungslenker günstige Voraussetzungen für die Gestaltung der Hebel bietet. Mit dieser Hebelkonzeption wird auch eine musterhafte Funktion für die Bewegung des Verdeckkastendeckels, namentlich in die Betriebsstellung, erzielt, und ihre Hebel übertragen wirkungsgerecht die bei Öffnungs- und Schließbewegungen des Faltverdecks auftretenden Kräfte zwischen letzterem und dem Hauptlager. Das Hauptlager mit den Lagern für zumindest einen Teil der Hebel eignet sich vorbildlich für die Realisierung einer kompakten Bauweise, d.h. mit geringem Raumanspruch.

In der Zeichnung wird ein Ausführungsbeispiel der Erfindung gezeigt, das nachstehend näher erläutert wird.

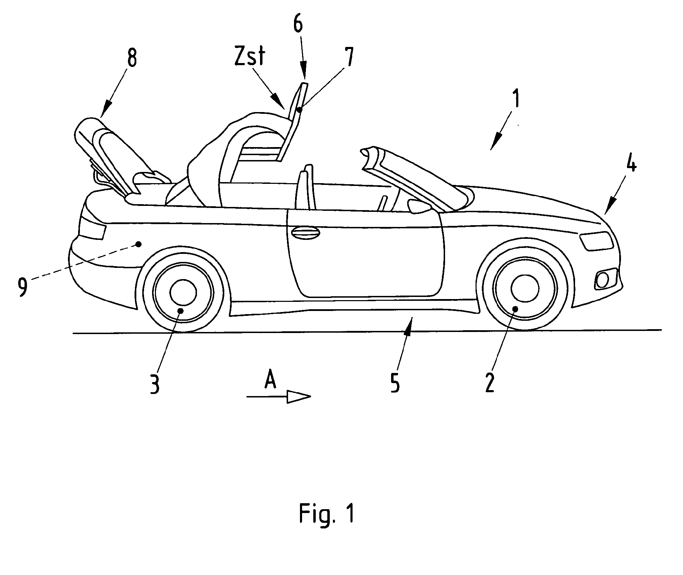

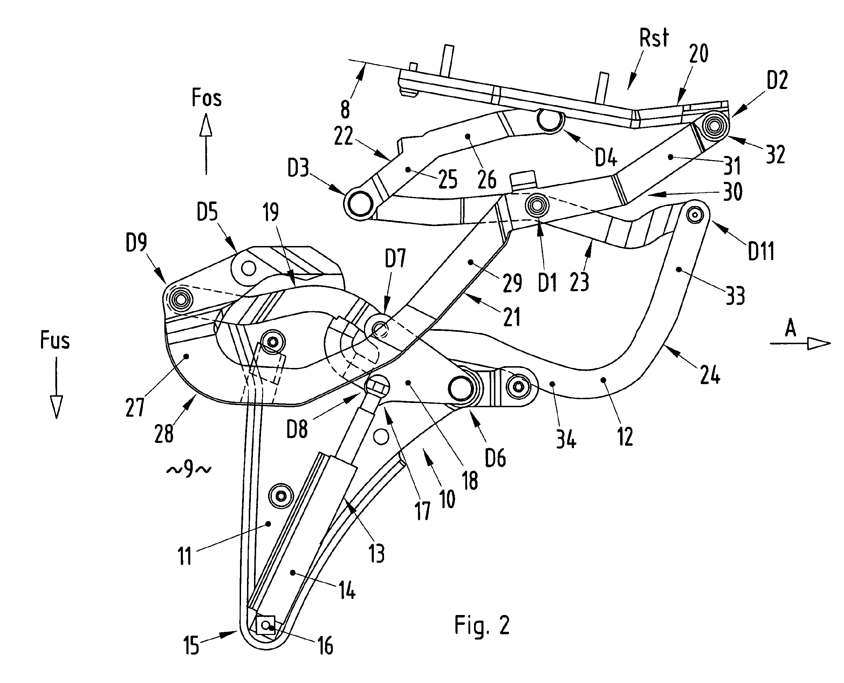

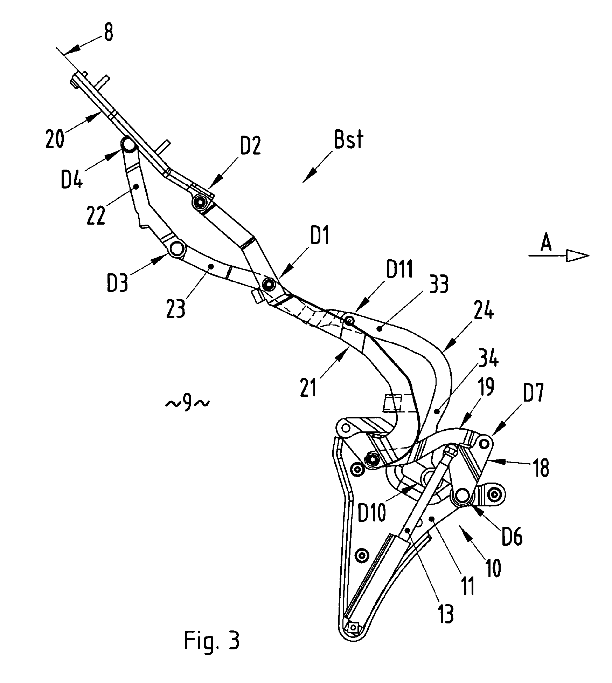

Fig. 1 eine Seitenansicht eines Personenkraftwagens mit einem Faltverdeck und einem Verdeckkastendeckel, Fig. 2 eine Betätigungseinrichtung für den Verdeckkastendeckel des Personenkraftwagens nach Fig.1 in größerem Maßstab, wobei der Verdeckkastendeckel eine Ruhestellung einnimmt, Fig. 3 die Betätigungseinrichtung gemäß Fig. 2 in kleinerem Maßstab, jedoch der Verdeckkastendeckel in einer aufgestellten Betriebsstellung.

Ein Personenkraftwagen 1 umfasst einen von Rädern 2 und 3 getragenen Aufbau 4 mit einem Grundkörper 5 und einem verstellbaren Dach 6, das zwischen einer Schließstellung und einer Offenstellung bewegbar und als Faltverdeck ausgebildet ist. Um das Faltdverdeck 7 von der Schließstellung in die Offenstellung und vice versa zu verbringen ist ein schwenkbar am Grundkörper des Aufbaus 4 gelagerter Verdeckkastendeckel 8 von einer Ruhestellung Rst -Fig.2- unter Überwindung einer Zwischenstellung Zst - Fig. 1- in eine aufgestellte Betriebsstellung Bst -Fig. 3- zu verlagern. In der Offenstellung des Faltverdecks 7 ist letzteres in einem Verdeckkasten 9 abgelegt, der in der Ruhestellung Rst des Verdeckkastendeckels 8 besagten Verdeckkasten 9 zur Fahrzeugoberseite Fos hin verschließt.

Zur Verstellung des Verdeckkastendeckels 8 zwischen Ruhestellung Rst und Betriebsstellung Bst dient eine in Abhängigkeit der Bewegung des Faltverdecks 7 zwischen Schließstellung und Offenstellung wirksam werdende Betätigungseinrichtung 10, die an Hauptlagern 11 angeordnete Verdeckkastengestänge 12 besitzt, die je Längsseite des Aufbaus 4 mit einem Hauptlager 11 versehen ist. An dem Hauptlager 11 sind mehrere Hebel und eine Antriebseinheit 13 gelagert.

Die Antriebseinheit 13 ist als Betätigungszylinder 14 bspw. hydraulischer Gattung mit einem ersten Endbereich 15 und einem Zylinderlager 16 dargestellt, welcher Endbereich 15 am Hauptlager 11 angelenkt ist. Ein zweiter Endbereich 17 des Betätigungszylinders 14 wirkt auf einen Betätigungshebel 18 ein, der über einen ersten Koppelhebel 19 einen ersten mit einem am Verdeckkastendeckel 8 gehaltenen Traghebel 20 verbundenen Steuerhebel 21 antreibt. An diesem Traghebel 20 ist ein zweiter Steuerhebel 22 gelenkig gelagert, der mittels eines zweiten Koppelhebels 23 mit einem am Hauptlager 11 angelenkten Verbindungslenker 24 zusammenarbeitet.

Der erste Steuerhebel 21 und der zweite Koppelhebel 23 sind in einer gemeinsamen ersten Drehachse D1 miteinander verbunden. Dabei liegt die erste Drehachse D1 zwischen einer zweiten Drehachse D2 des ersten Steuerhebels 21 und des Traghebels 20 bzw. einer dritten Drehachse D3 des zweiten Koppelhebels 23 und des zweiten Steuerhebels 22. Letzterer ist unter Vermittlung einer vierten Drehachse D4 am Traghebel 20 gelagert, und er ist mit einem ersten Steuerhebelabschnitt 25 und einem zweiten Steuerhebelabschnitt 26 versehen, die in einem stumpfen Winkel zueinander verlaufen. Am Hauptlager 11 ist der erste Steuerhebel 21 unter Zwischenschaltung einer fünften Drehachse D5 angelenkt, die In Fahrtrichtung A betrachtet hinter der zweiten Drehachse D2 zwischen erstem Steuerhebel 21 und Traghebel 20 liegt.

Von der fünften Drehachse D5 weggeführt ist ein erster Steuerhebelabschnitt 27, der sich in Richtung Fahrzeugunterseite Fus erstreckt und einen angenäherten 180° Bogen 28 aufweist. Daran schließt sich ein zweiter Steuerhebelabschnitt 29 an, von dem nach der ersten Drehachse D1 ein dritter wenigstens eine Kröpfung 30 aufweisender Steuerhebelabschnitt 31 wegführt, dessen Ende 32 an der Drehachse D2 endet.

Der Betätigungshebel 18 ist mit einer sechsten Drehachse D6 am Hauptlager 11 und einer siebten Drehachse D7 am ersten Koppelhebel 19 angelenkt, und an einer achten Drehachse 8 sind der Betätigungshebel 18 und die Antriebseinheit 13, die ja als Betätigungszylinder 14 ausgebildet ist, schwenkbeweglich miteinander gekoppelt. Darüber hinaus ist der erste Koppelhebel 19 mit einer neunten Drehachse D9 am ersten Steuerhebel 21 angelenkt, und zwar im Bereich des Bogens 28.

In Fahrtrichtung A gesehen und bspw. auch in der Ruhestellung Rst des Verdeckkastendeckels 8 liegt der Verbindungslenker 24 zwischen Hauptlager 11 und dem zweiten Koppelhebel 23 mit einer zehnten am Hauptlager 11 gehaltenen Drehachse D10 -Fig. 3-. Der Verbindungslenker 24 weist z.B. im rechten Winkel zueinander verlaufende Verbindungshebelabschnitte 33 und 34 auf, und der zweite Koppelhebel 23 und der Verbindungslenker 24 wirken über eine elfte Drehachse D11 zusammen.

Schließlich bilden der erste Koppelhebel 19, der erste Steuerhebel 21, der zweite Steuerhebel 22 und der zweite Koppelhebel 23 ein Siebengelenksystem.

## Patentansprüche

1. Betätigungseinrichtung für einen Verdeckkastendeckel (8) eines Personenkraftwagens, welcher Verdeckkastendeckel die Bewegung eines an einem Aufbau gelagerten Faltverdecks (7) von einer Schließstellung in eine abgelegte Offenstellung erlaubt, wobei die Betätigungseinrichtung (10) an Hauptlagern angebrachte Verdeckkastengestänge umfasst, die je Längsseite des Aufbaus mehrere Hebel und eine Antriebseinheit (13) aufweisen, welche Antriebseinheit mit den Hebeln den Verdeckkastendeckel aus einer Ruhe- bzw. Grundstellung (Rst) in eine aufgestellte Betriebsstellung (Bst) betätigt und umgekehrt, **dadurch gekennzeichnet, dass** die Antriebseinheit (13) auf einen Betätigungshebel (18) einwirkt, der über einen ersten Koppelhebel (19) einen ersten mit einem am Verdeckkastendeckel (8) gehaltenen Traghebel (20) verbundenen Steuerhebel (21) antreibt und dass am Traghebel (20) ein zweiter Steuerhebel (22) gelenkig gelagert ist, der unter Vermittlung eines zweiten Koppelhebels (23) mit einem am Hauptlager (11) schwenkbar gelagerten Verbindungslenker (24) zusammenarbeitet.

2. Betätigungseinrichtung nach Anspruch 1, **dadurch gekennzeichnet, dass** der erste Steuerhebel (21) und der zweite Koppelhebel (23) in einer gemeinsamen ersten Drehachse (D1) miteinander verbunden sind.

3. Betätigungseinrichtung nach Anspruch 2, **dadurch gekennzeichnet, dass** die erste Drehachse (D1) zwischen einer zweiten Drehachse (D2) des ersten Steuerhebels (21) und des Traghebels (20) und einer dritten Drehachse (D3) des zweiten Koppelhebels (23) und des zweiten Steuerhebels (22) liegt, der mittels einer vierten Drehachse (D4) am Traghebel (20) gelagert ist.

4. Betätigungseinrichtung nach den Ansprüchen 1 bis 3, **dadurch gekennzeichnet, dass** der erste Steuerhebel (21) unter Zwischenschaltung einer fünften Drehachse (D5) am Hauptlager (11) angelenkt ist, die in Fahrtrichtung (A) gesehen hinter der zweiten Drehachse (D2) zwischen dem erstem Steuerhebel (21) und Traghebel (20) liegt.

5. Betätigungseinrichtung nach Anspruch 4, **dadurch gekennzeichnet, dass** der erste Steuerhebel (21) einen von der fünften Drehachse (D5) weggeführten ersten Steuerhebelabschnitt (27) umfasst, der einen angenäherten 180° Bogen (28) aufweist, an den ein zweiter etwa bis zur ersten Drehachse (D1) reichender Steuerabschnitt (29) anschließt, wobei ein dritter Steuerhebelabschnitt (31) nach der ersten Drehachse (D1).

6. Betätigungseinrichtung nach einem oder mehreren der vorangehenden Ansprüche, **dadurch gekennzeichnet, dass** der Betätigungshebel (18) mit einer sechsten Drehachse (D6) am Hauptlager (11) und einer siebten Drehachse (D7) am ersten Koppelhebel (19) angelenkt ist, wobei an einer achten Drehachse (D8) der Betätigungshebel (18) und die als Betätigungszylinder (14) ausgebildete Antriebseinheit (13) schwenkbeweglich gekoppelt sind.

7. Betätigungseinrichtung nach Anspruch 6, **dadurch gekennzeichnet, dass** der erste Koppelhebel (19) mit einer neunten Drehachse (D9) am ersten Steuerhebel (21) angelenkt ist.

8. Betätigungseinrichtung nach einem oder mehreren der vorangehenden Ansprüche, **dadurch gekennzeichnet, dass** in Fahrtrichtung (A) gesehen und in Ruhestellung (Rst) des Verdeckkastendeckels (8) der Verbindungslenker (33) zwischen Hauptlager (11) und zweitem Koppelhebel (23) mit einer zehnten am Hauptlager (11) gehaltenen Drehachse (D10) hinter einer elften zwischen Verbindungslenker (24) und zweitem Koppelhebel (23) vorgesehenen Drehachse (D11) liegt.

9. Betätigungseinrichtung nach Anspruch 8, **dadurch gekennzeichnet, dass** der Verbindungslenker (24) im Winkel zueinander verlaufende Verbindungslenkerabschnitte (33 und 34) aufweist.

10. Betätigungseinrichtung nach Anspruch 9, **dadurch gekennzeichnet, dass** die Verbindungslenkerabschnitte (33 und 34) zumindest bereichsweise in etwa einen rechten Winkel einschließen.

11. Betätigungseinrichtung nach einem oder mehreren der vorangehenden Ansprüche, **dadurch gekennzeichnet, dass** der erste Koppelhebel (19), der erste Steuerhebel (21), der zweite Steuerhebel (22) und der zweite Koppelhebel (23 ) ein Siebengelenksystem bilden.

## Claims

1. Actuator for a convertible roof (8) of a motor vehicle, which convertible roof allows the movement of a folding roof (7) mounted on a structure from a closed position into a folded down open position, wherein the actuator (10) comprises convertible roof rods attached to main bearings which comprise a plurality of levers and a drive unit (13) on each longitudinal side of the structure, which drive unit with the levers actuates the convertible roof from a position of rest or basic position (Rst) into a set position (Bst) and vice versa, **characterised in that** the drive unit (13) operates an actuating lever (18), which via a first coupling lever (19) drives a first control lever (21) connected to a support lever (20) held on the convertible roof (8) and **in that** on the support lever (20) a second control lever (22) is hinge mounted, which by means of a second coupling lever (23) operates together with a connecting bar (24) mounted pivotably on the main bearing (11).

2. Actuator according to claim 1, **characterised in that** the first control lever (21) and the second coupling lever (23) are connected together in a common first axis of rotation (D1).

3. Actuator according to claim 2, **characterised in that** the first axis of rotation (D1) lies between a second axis of rotation (D2) of the first control lever (21) and the support lever (20) and a third axis of rotation (D3) of the second coupling lever (23) and the second control lever (22), which is mounted by means of a fourth axis of rotation (D4) on the support lever (20).

4. Actuator according to claims 1 to 3, **characterised in that** the first control lever (21) is hinged onto the main bearing (11) with the interconnection of a fifth axis of rotation (D5), which as viewed in travelling direction (A) lies behind the second axis of rotation (D2) between the first control lever (21) and support lever (20).

5. Actuator according to claim 4, **characterised in that** the first control lever (21) comprises a first control lever section (27) guided away from the fifth axis of rotation (D5), which first control lever section has approximately a 180° curve (28), to which a second control section (29) extending up to the first axis of rotation (D1) connects, wherein a third control lever section (31) after the first axis of rotation (D1).

6. Actuator according to one or more of the preceding claims, **characterised in that** the actuating lever (18) is hinged by a sixth axis of rotation (D6) onto the main bearing (11) and by a seventh axis of rotation (D7) onto the first coupling lever (19), wherein on an eighth axis of rotation (D8) the actuating lever (18) and the drive unit (13) configured as an actuating cylinder (14) are coupled pivotably.

7. Actuator according to claim 6, **characterised in that** the first coupling lever (19) is hinged by a ninth axis of rotation (D9) to the first control lever (21).

8. Actuator according to one or more of the preceding claims, **characterised in that** as viewed in travelling direction (A) and in a position of rest (Rst) of the convertible roof (8) the connecting bar (33) lies between the main bearing (11) and second coupling lever (23) with a tenth axis of rotation (D10) held on the main bearing (11) behind an eleventh axis of rotation (D11) provided between the connecting bar (24) and second coupling lever (23).

9. Actuator according to claim 8, **characterised in that** the connecting bar (24) comprises connecting bar sections (33 and 34) running at an angle relative to one another.

10. Actuator according to claim 9, **characterised in that** the connecting bar sections (33 and 34) enclose at least approximately a right angle.

11. Actuator according to one or more of the preceding claims, **characterised in that** the first coupling lever (19), the first control lever (21), the second control lever (22) and the second coupling lever (23) form a seven bar linkage system.

## Revendications

1. Dispositif d'actionnement pour un couvercle de coffre de capote (8) d'un véhicule automobile particulier, lequel couvercle de coffre de capote permet le mouvement d'une capote pliante (7) logée sur une carrosserie d'une position fermée dans une position ouverte déposée, le dispositif d'actionnement (10) comportant des tringles de coffre de capote montées sur des paliers principaux qui présentent par côté longitudinal de la carrosserie plusieurs leviers et une unité d'entraînement (13), laquelle unité d'entraînement actionnant avec les leviers le couvercle de coffre de capote d'une position de repos ou de base (Rst) dans une position de fonctionnement installée (Bst) et inversement, **caractérisé en ce que** l'unité d'entraînement (13) agit sur un levier d'actionnement (18) qui entraîne par un premier levier de couplage (19) un premier levier de commande (21) relié à un levier porteur (20) maintenu sur le couvercle de coffre de capote (8) et **en ce que**, sur le levier porteur (20), un second levier de commande (22) est logé de manière articulée, lequel collabore par l'intermédiaire d'un second levier de couplage (23) avec une bielle de liaison (24) logée de manière pivotante sur le palier principal (11).

2. Dispositif d'actionnement selon la revendication 1, **caractérisé en ce que** le premier levier de commande (21) et le second levier de couplage (23) sont reliés entre eux dans un premier axe de rotation commun (D1).

3. Dispositif d'actionnement selon la revendication 2, **caractérisé en ce que** le premier axe de rotation (D1) se trouve entre un deuxième axe de rotation (D2) du premier levier de commande (21) et du levier porteur (20) et un troisième axe de rotation (D3) du second levier de couplage (23) et du second levier de commande (22), lequel est logé à l'aide d'un quatrième axe de rotation (D4) sur le levier porteur (20).

4. Dispositif d'actionnement selon l'une quelconque des revendications 1 à 3, **caractérisé en ce que** le premier levier de commande (21) est articulé en intercalant un cinquième axe de rotation (D5) sur le palier principal (11), qui se trouve vu dans le sens de la marche (A) derrière le deuxième axe de rotation (D2) entre le premier levier de commande (21) et le levier porteur (20).

5. Dispositif d'actionnement selon la revendication 4, **caractérisé en ce que** le premier levier de commande (21) comporte une première section de levier de commande (27) guidée en éloignement du cinquième axe de rotation (D5), qui présente un arc (28) approximatif de 180°, à laquelle une deuxième section de commande (29) atteignant à peu près le premier axe de rotation (D1) se raccorde, une troisième section de levier de commande (31) après le premier axe de rotation (D1).

6. Dispositif d'actionnement selon l'une ou plusieurs quelconques des revendications précédentes, **caractérisé en ce que** le levier d'actionnement (18) est articulé avec un sixième axe de rotation (D6) sur le palier principal (11) et un septième axe de rotation (D7) sur le premier levier de couplage (19), le levier d'actionnement (18) et l'unité d'entraînement (13) réalisée comme cylindre d'actionnement (14) étant couplés de manière mobile en pivotement sur un huitième axe de rotation (D8).

7. Dispositif d'actionnement selon la revendication 6, **caractérisé en ce que** le premier levier de couplage (19) est articulé avec un neuvième axe de rotation (D9) sur le premier levier de commande (21).

8. Dispositif d'actionnement selon l'une ou plusieurs quelconques des revendications précédentes, **caractérisé en ce que**, vu dans le sens de la marche (A) et en position de repos (Rst) du couvercle de coffre de capote (8), la bielle de liaison (33) se trouve entre le palier principal (11) et le second levier de couplage (23) avec un dixième axe de rotation (D10) maintenu sur le palier principal (11) derrière un onzième axe de rotation (D11) prévu entre la bielle de liaison (24) et le second levier de couplage (23).

9. Dispositif d'actionnement selon la revendication 8, **caractérisé en ce que** la bielle de liaison (24) présente des sections de bielle de liaison (33 et 34) s'étendant en angle l'une par rapport à l'autre.

10. Dispositif d'actionnement selon la revendication 9, **caractérisé en ce que** les sections de bielle de liaison (33 et 34) forment au moins par endroits à peu près un angle droit.

11. Dispositif d'actionnement selon l'une ou plusieurs quelconques des revendications précédentes, **caractérisé en ce que** le premier levier de couplage (19), le premier levier de commande (21), le second levier de commande (22) et le second levier de couplage (23) forment un système à sept articulations.
